## Europäisches Patentamt

## European Patent Office

## Office européen des brevets

(11) Veröffentlichungsnummer: **0 028 315**
**B1**

(12) **EUROPÄISCHE PATENTSCHRIFT**

(45) Veröffentlichungstag der Patentschrift:
20.07.83

(51) Int. Cl.³: **C 01 B 25/08**

(21) Anmeldenummer: **80105863.7**

(22) Anmeldetag: **27.09.80**

(54) Verfahren zur Herstellung von Magnesiumphosphid.

(30) Priorität: **31.10.79 DE 2943905**

(43) Veröffentlichungstag der Anmeldung:
**13.05.81 Patentblatt 81/19**

(45) Bekanntmachung des Hinweises auf die Patenterteilung:
**20.07.83 Patentblatt 83/29**

(84) Benannte Vertragsstaaten:
**BE DE FR GB IT LU NL SE**

(56) Entgegenhaltungen:
**GB-A-1 175 511**

,,Gmelins Handbuch der anorganischen Chemie'',
8. Auflage, Magnesium, Teil B. ,,Die Verbindungen des Magnesiums'', System-Nummer 27, 1939,
Verlag Chemie GmbH Berlin, DE.
G. Brauer: ,,Handbuch der präparativen anorganischen Chemie'', 3. Auflage, 2. Bd., 1978. Ferdinand-Enke Verlag Stuttgart, DE.

(73) Patentinhaber: **HOECHST AKTIENGESELLSCHAFT,
Postfach 80 03 20, D-6230 Frankfurt/Main 80 (DE)**

(72) Erfinder: **Dorn, Friedrich Wilhelm, Dr., Giselherweg 3,
D-5030 Hürth (DE)**
Erfinder: **Heymer, Gero, Dr., Fasanenaue 12,
D-5042 Erftstadt (DE)**

## Verfahren zur Herstellung von Magnesiumphosphid

Die Erfindung betrifft ein wirtschaftliches Verfahren zur Herstellung von Magnesiumphosphid der Formel $Mg_3P_2$ aus Magnesium und Phosphor. Magnesiumphosphid kann beispielsweise zur Bekämpfung von Insekten in Getreide und anderen Nahrungs- bzw. Genussmitteln verwendet werden.

Es ist nach G. Brauer, „Handbuch der präparativen anorganischen Chemie", 3. Auflage, 1978, Bd. 2, S. 913, bekannt, kleine Mengen von Magnesiumphosphid durch Einwirkung von Phosphordampf, der durch Erhitzen von rotem Phosphor erzeugt wird, auf Magnesiumspäne bei Temperaturen unterhalb des Schmelzpunktes des Magnesiums zu gewinnen, wobei überschüssiger Phosphor nach Beendigung der Reaktion bei etwa 700° C abgetrieben wird.

Weiterhin kann nach dem Verfahren der DE-B Nr. 1567520 stark verunreinigtes Magnesiumphosphid derart hergestellt werden, dass man Magnesiumpulver mit gemahlenem rotem Phosphor und pulverförmigem Magnesiumoxid als inertes Verdünnungsmittel mischt und das Gemisch durch elektrische Zündung zur Reaktion bringt. Dabei dient das Verdünnungsmittel zur Phlegmatisierung der stark exothermen Reaktion sowie zur zeitweiligen Bindung der Reaktionswärme.

Den bekannten Verfahren haften erhebliche Nachteile an, welche aus der Verwendung von feinteiligem Magnesium sowie von rotem Phosphor als Ausgangsprodukte resultieren. Magnesiumpulver bzw. -späne kosten das 2- bis 4fache von kompaktem Magnesium, da die Herstellung des Pulvers bzw. der Späne aufwendig und mit Gefahr verbunden ist. Desgleichen ist roter Phosphor wesentlich teurer als die farblose Modifikation dieses Elementes. Ein weiterer Nachteil der Arbeitsweise mit Phosphordampf im Überschuss ist der höhere Arbeits- und Zeitaufwand infolge der Notwendigkeit, nach Abschluss der Reaktion den Phosphorüberschuss durch Temperaturerhöhung beseitigen zu müssen. Schliesslich ermöglicht das Verfahren der DE-B Nr. 1567520 nicht die Herstellung von reinem, sondern mit dem Verdünnungsmittel versetztem Magnesiumphosphid.

Das Verfahren der GB-A Nr. 1175511 sieht schliesslich vor, Metallphosphide derart herzustellen, dass das in einem Schmelzgefäss verflüssigte Metall, wie z.B. Cu, Mg, Al, Zn und dergleichen, durch eine den Boden des Gefässes bildende perforierte Platte in einen vertikalen, zylindrischen und beheizten Reaktor versprüht wird und mit in den Raktor eingeleiteten Phosphordämpfen zur Reaktion gebracht wird, wobei das entstehende Metallphosphid von dem im unteren Teil des Reaktors angeordneten Sammelgefäss aufgenommen wird.

Da vorbeschriebene Reaktion keine in sekundenschnelle ablaufende Spontanreaktion darstellt, sondern eine Zeitreaktion ist, muss der Reaktionsweg der sich im freien Fall im Reaktor bewegenden flüssigen Metalltropfen so ausreichend dimensioniert sein, dass eine vollständige Umsetzung der Reaktionspartner gewährleistet ist. In der Praxis bedeutet dies den Einsatz von hohen Reaktoren. Da letztere aber über ihre Gesamtlänge auf hohe Temperaturen von über 600° C beheizt werden müssen, scheitert die Wirtschaftlichkeit dieses Verfahrens einmal an dem übermässigen Bedarf an Wärmeenergie. Darüber hinaus beträgt der Reinheitsgrad des hergestellten Metallphosphids bestenfalls 91,3%.

Vorgenannte Nachteile werden von dem Verfahren der Erfindung überwunden, indem als Ausgangsprodukte zur Herstellung von Magnesiumphosphid kompaktes Magnesium sowie farbloser Phosphor verwendet werden. Weiterhin sieht die erfindungsgemässe Arbeitsweise eine Reaktionsführung vor, die einen zügigen und stöchiometrischen Umsatz der Reaktionsteilnehmer ermöglicht und einen explosionsähnlichen Verlauf der Umsetzung auch ohne Zusatz von Phlegmatisierungsmitteln ausschliesst.

Die Lösung der gestellten Aufgabe beruht auf der Beobachtung, dass sich beim Umsatz von Magnesium mit Phosphor auf dem Magnesium Deckschichten auf festem $Mg_3P_2$ bilden, die den Transport der Reaktionspartner zueinander und dadurch die Gesamtreaktionsgeschwindigkeit hemmen bzw. zum Stillstand bringen. Aus diesem Grunde reagiert festes Magnesiumpulver mit grosser Oberfläche bei 600° C mit Phosphordampf schneller als flüssiges Magnesium bei 700° C.

Gegenstand der Erfindung ist somit ein Verfahren zur Herstellung von Magnesiumphosphid durch Umsetzung von flüssigem Magnesium und gasförmigem Phosphor bei einer Temperatur von mehr als 650° C unter Luftausschluss, welches dadurch gekennzeichnet ist, dass man flüssiges Magnesium mit stöchiometrischen Mengen von gasförmigem Phosphor unter guter Durchmischung der Reaktionskomponenten in Kontakt bringt und zu Magnesiumphosphid umsetzt, wobei die Bildung von Deckschichten aus festem Magnesiumphosphid auf der Oberfläche des Magnesiums durch ständige Einwirkung mechanischer Hilfsmittel verhindert wird.

Ein weiteres Merkmal der Erfindung besteht darin, dass man als Ausgangsprodukt kompaktes Magnesium, z.B. in Stangen- oder Barrenform, einsetzt, und letzteres aufschmilzt. Vorteilhafterweise führt man die Umsetzung bei einer Temperatur von etwa 700 bis 900° C in Gegenwart eines inerten Gases, wie z.B. Argon, durch. Zur Verhinderung der Bildung von Deckschichten aus Magnesiumphosphid haben sich Mahlkugeln bewährt, die in den Reaktionsansatz eingebracht und nach dem Prinzip der Kugelmühle in ständiger Bewegung gehalten werden. Der gleiche Effekt kann aber auch dadurch erreicht werden, dass man die Reaktion in einem beheizbaren Kneter oder in Rohrmühlen bzw. Schüsselmühlen und dergleichen durchführt.

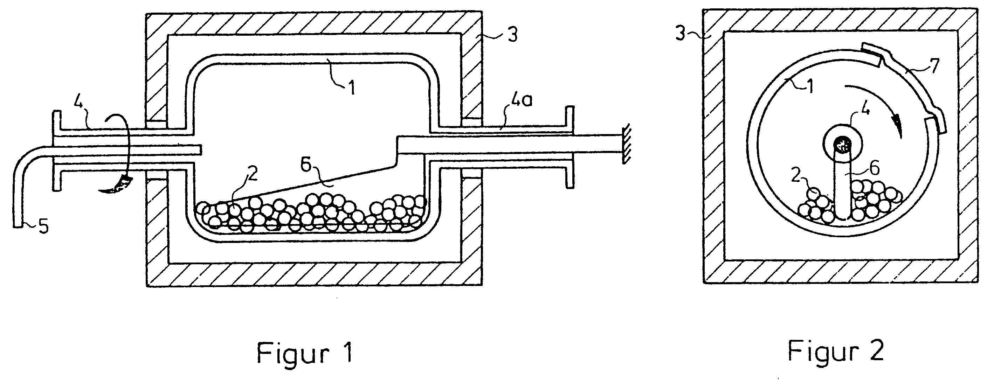

Eine beispielhafte Ausführungsform einer zur Durchführung des Verfahrens der Erfindung geeigneten Vorrichtung wird in Fig. 1 und 2 dargestellt.

Hierbei stellt Fig. 1 eine Seitenansicht der Vorrichtung dar, und zwar teilweise im Schnitt, während Fig. 2 einen Querschnitt verdeutlicht.

Die Vorrichtung besteht aus dem zylindrischen Behälter 1, welcher die Mahlkugeln 2 enthält und von dem Heizmantel 3 umgeben ist. Grund- und Deckfläche des Behälters 1 sind zentrisch an die Hohlwelle 4 bzw. 4a angeschlossen, so dass der Behälter 1 von der Hohlwelle 4 bzw. 4a getragen wird und über die Hohlwelle in Rotation versetzt werden kann. Durch die Hohlwelle 4 erfolgt die Zufuhr des inerten Gases sowie des Phosphordampfes, während das Inertgas durch die Hohlwelle 4a aus dem Behälter 1 abströmt. Im Falle des Einsatzes von flössigem Phosphor wird dieser durch die Kapillare 5 in den Reaktionsraum gefördert. Schliesslich sind weitere Bestandteile der Vorrichtung der Stromstörer 6 sowie die Verschlussklappe 7 zur Produktentnahme aus dem Behälter 1.

Das Verfahren der Erfindung ist im Vergleich zu den herkömmlichen Arbeitsweisen technisch fortschrittlich, da es die wirtschaftliche Herstellung von reinem Magnesiumphosphid ohne Anwendung von Verdünnungsmitteln in Ausbeuten von über 90% der Theorie ermöglicht.

Die nachfolgenden Beispiele dienen zur Erläuterung des erfindungsgemässen Verfahrens.

*Beispiel 1*

Es wurde der zylindrische Behälter 1 von 3 l Inhalt und aus hitzebeständigem Stahl bestehend mit 300 g (12,34 mol) stangenförmigem Magnesium sowie mit 3,2 kg oder 35 Mahlkugeln, welche aus Stahl bestanden und einen Durchmesser von 28 mm besassen, beschickt. Nach Verdrängen der Luft im Behälter 1 durch Einleiten von Argon durch die Hohlwelle 4 wurde der Behälter 1 mittels Heizmantel 3 auf 810° C aufgeheizt. Danach wurde der Argongasstrom auf 15 l/h reduziert und innerhalb von 90 min 255 g (8,23 mol) gasförmiger Phosphor durch die Hohlwelle 4 in den Reaktionsraum geleitet. Zur Kompensation der bei der Umsetzung entstehenden Reaktionswärme wurde die Heizleistung des Heizmantels 3 von 1,7 kW auf 1,1 kW vermindert. Der zugeführte Phosphor wurde vom Magnesium vollständig gebunden, so dass aus der Hohlwelle 4a nur Spuren von Phosphor austraten. Die Bildung von festen Deckschichten aus Magnesiumphosphid auf der Oberfläche des Magnesiums wurde verhindert, indem der Behälter 1 um seine Längsachse mit 38 tr/min in Rotation versetzt wurde. Nach beendeter Einleitung des Phosphordampfes wurde noch 10 min gewartet und dann der Behälter 1 nach Entfernen des Heizmantels 3 mit Wasser besprüht und schnell abgekühlt. Anschliessend wurde der Behälterinhalt durch die Verschlussklappe 7 entnommen, die Mahlkugeln vom Magnesiumphosphid getrennt und das Phosphid gewogen und analysiert. Es wurden 541 g Magnesiumphosphid in Form eines gelbgrünen Pulvers mit einem Schüttgewicht von 0,68 g/ml und einem Gehalt von 98,3% $Mg_3P_2$ erhalten, was einer Ausbeute von 95,9% der Theorie entspricht, bezogen auf den Magnesiumeinsatz.

*Beispiel 2*

Es wurde analog Beispiel 1 verfahren, jedoch wurden bei 680 bis 720° C 250 g (10,2 mol) Magnesium mit 212 g (6,8 mol) Phosphor, wobei der Phosphor in flüssiger, farbloser Form durch die Kapillare 5 in der Hohlwelle 4 bis an den Reaktionsraum herangeführt wurde, innerhalb von 70 min umgesetzt. Dem Behälter 1 wurden 440 g Produkt mit einem $Mg_3P_2$-Gehalt von 95,1% entnommen. Dies entspricht einer Ausbeute von 90,5% der Theorie.

*Beispiel 3*

Es wurde analog Beispiel 1 verfahren, jedoch wurden bei 860 bis 890° C 200 g (8,2 mol) Magnesium mit 170 g (5,5 mol) gasförmigen Phosphor umgesetzt. Dem Behälter 1 wurden 349 g Produkt entnommen mit einem $Mg_3P_2$-Gehalt von 97,0%, entsprechend einer Ausbeute von 91,5% der Theorie.

*Beispiel 4* (Vergleichsbeispiel)

Es wurde analog Beispiel 1 verfahren, jedoch wurde auf den Einsatz von Mahlkugeln verzichtet. Der Behälter 1 wurde mit 250 g (10,2 mol) Magnesium beschickt. Nach Erhitzen des Behälters auf 750° C wurden 170 g (5,5 mol) Phosphordampf in den Behälter innerhalb von 85 min eingeleitet. Das gleichzeitig durch den Behälter strömende Argon förderte einen grossen Teil des eingeleiteten Phosphordampfes unreagiert aus dem Behälter. Nach Abkühlen des Behälters konnte kein Produkt entnommen werden, da das Magnesium gleichmässig auf der Behälterinnenwand aufgeschmolzen war und lediglich mit einer dünnen Schicht von $Mg_3P_2$ bedeckt war. Zur Bestimmung des Umsatzes wurde das $Mg_3P_2$ im Behälter mit Wasser hydrolysiert und die Menge des dabei entstandenen Phosphorwasserstoffes ermittelt. Es ergaben sich 11,2 l $PH_3$ bei 23° C und 1,014 bar, was einer Ausbeute von 8,4% der Theorie, bezogen auf die eingesetzte Menge Magnesium, entspricht.

**Patentansprüche**

1. Verfahren zur Herstellung von Magnesiumphosphid durch Umsetzung von flüssigem Magnesium und gasförmigem Phosphor bei einer Temperatur von mehr als 650° C unter Luftausschluss, dadurch gekennzeichnet, dass man flüssiges Magnesium mit stöchiometrischen Mengen von gasförmigem Phosphor unter guter Durchmischung der Reaktionskomponenten in Kontakt bringt und zu Magnesiumphosphid umsetzt, wobei die Bildung von Deckschichten aus festem Magnesiumphosphid auf der Oberfläche des Magnesiums durch ständige Einwirkung mechanischer Hilfsmittel verhindert wird.

2. Verfahren nach Anspruch 1, dadurch gekennzeichnet, dass man die Umsetzung bei einer Temperatur von etwa 700 bis 900° C durchführt.

3. Verfahren nach einem der beiden Ansprüche 1 oder 2, dadurch gekennzeichnet, dass man die Umsetzung in Gegenwart eines inerten Gases, insbesondere von Argon, durchführt.

4. Verfahren nach den Ansprüchen 1 bis 3, dadurch gekennzeichnet, dass man zur Verhinderung der Bildung von Deckschichten aus Magnesiumphosphid in den Reaktionsansatz Mahlkugeln einbringt und diese in ständige Bewegung versetzt.

5. Verfahren nach den Ansprüchen 1 bis 3, dadurch gekennzeichnet, dass man die Reaktion in einem Kneter durchführt.

## Claims

1. Process for making magnesium phosphide by reacting liquid magnesium and gaseous phosphorus at a temperature higher than 650° C with the exclusion of air, wherein liquid magnesium is reacted with stoichiometric proportions of gaseous phosphorus with good agitation of the reactants to give magnesium phosphide, the formation of covering layers of solid magnesium phosphide on the surface of the magnesium being prevented under the continuous action of mechanical aids.

2. Process as claimed in claim 1, wherein the reaction is effected at a temperature of about 700 to 900° C.

3. Process as claimed in claim 1 or 2, wherein the reaction is effected in the presence of an inert gas, especially argon.

4. Process as claimed in claims 1 to 3, wherein in order to avoid the formation of covering layers of magnesium phosphide, grinding balls are added to the reaction batch and kept under continuous agitation.

5. Process as claimed in claims 1 to 3, wherein the reaction is effected in a kneader.

## Revendications

1. Procédé de préparation de phosphure de magnésium par réaction de magnésium liquide et de phosphore gazeux à une température supérieure à 650° C à l'abri de l'air, caractérisé en ce que l'on met le magnésium liquide en contact avec des quantités stœchiométriques de phosphore gazeux avec un bon brassage des réactifs pour le convertir en phosphure de magnésium, la formation de couches couvrantes en phosphure de magnésium solide à la surface du magnésium étant évitée par l'action continue de moyens mécaniques auxiliaires.

2. Procédé selon la revendication 1, caractérisé en ce que l'on effectue la réaction à une température d'environ 700 à 900° C.

3. Procédé selon l'une des revendications 1 ou 2, caractérisé en ce que l'on effectue la réaction en présence d'un gaz inerte, en particulier d'argon.

4. Procédé selon les revendications 1 à 3, caractérisé en ce que, pour éviter la formation de couches couvrantes de phosphure de magnésium, on place des billes de broyage dans la charge et on les maintient en agitation continue.

5. Procédé selon les revendications 1 à 3, caractérisé en ce que l'on effectue la réaction dans un malaxeur.

Figur 2

Figur 1